Europäisches Patentamt

European Patent Office

Office européen des brevets

(11) Veröffentlichungsnummer: **0 142 490**
A2

(12) # EUROPÄISCHE PATENTANMELDUNG

(21) Anmeldenummer: **84890189.8**

(22) Anmeldetag: **12.10.84**

(51) Int. Cl.⁴: **F 02 D 19/02**
   F 02 B 43/00, F 02 D 35/00

(30) Priorität: **17.10.83 AT 3681/83**

(43) Veröffentlichungstag der Anmeldung:
   **22.05.85 Patentblatt 85/21**

(84) Benannte Vertragsstaaten:
   **BE DE FR GB LU**

(71) Anmelder: **Jenbacher Werke AG**
   **Achenseestrasse 1-3**
   **A-6200 Jenbach/Tirol(AT)**

(72) Erfinder: **Burgstaller, Günter**
   **Am Rain 376**
   **A-6135 Stans(AT)**

(74) Vertreter: **Hofinger, Engelbert et al,**
   **Torggler-Hofinger Wilhelm-Greil-Strasse 16**
   **A-6020 Innsbruck(AT)**

(54) **Verfahren zum Betrieb einer Gasmaschine.**

(57) Um bei einer mit Gas unterschiedlichen Heizwertes betriebenen Gasmaschine den Druck des Verbrennungsgases so einstellen zu können, daß die Zuordnung der Stellung des Einlaßventils (7) zur Motorleistung konstant bleibt, wird die Qualität des Verbrennungsgases durch einen Sensor (5) festgestellt. Die Luftzufuhr in den Motor wird durch einen Sensor (8) im Abgasstrom optimiert.

Fig. 1

Croydon Printing Company Ltd.

0142490

## Verfahren zum Betrieb einer Gasmaschine

Die Erfindung bezieht sicht auf ein Verfahren zum Betrieb einer Gasmaschine mit Gas unterschiedlichen Heizwertes, wobei den Zylindern der Gasmaschine getrennt brennbare Bestandteile enthaltendes Verbrennungsgas einerseits und Luft andererseits zugeführt werden (innere Gemischbildung), und bei einer Änderung in der Zusammensetzung des Verbrennungsgases dieses bis zur Einleitung in die Gasmaschine lediglich hinsichtlich seiner pro Zeiteinheit zugeführten Menge durch Änderung seines Druckes derart geändert wird, daß an einem Druckregler kontinuierlich jener Druck des Verbrennungsgases eingestellt wird, welcher einer gleichbleibenden Zuordnung zwischen der Stellung der Einlaßventile für das Verbrennungsgas und der vom Motor abgegebenen Leistung entspricht.

Die Erfindung geht von Betriebsbedingungen aus, bei denen nicht von vorneherein feststeht, wie die Gaszusammensetzung in jedem gegebenen Augenblick sein wird. Beispielsweise soll es mit dem erfindungsgemäßen Verfahren möglich sein, Grubengas mit unkontrolliert schwankendem $CH_4$-Gehalt zu verarbeiten, ohne daß sich die Änderungen im Heizwert des zugeführten Gases in Leistungsschwankungen des Motors niederschlagen.

Bei der in DE-C-21 12 373 beschriebenen Einrichtung wird diese Aufgabe zu lösen versucht, indem das vom Motor gelieferte Drehmoment gemessen und bei Absinken desselben der Druck des Verbrennungsgases erhöht wird. Nachteilig dabei ist, daß eine Leistungsverminderung sowohl durch eine Verschlechterung des Heizwertes des Verbrennungsgases wie durch eine nicht optimale Luftbeimischung hervorgerufen sein kann und eine bloße Druckerhitzung daher den gewünschten Effekt nicht auf die wirtschaftlichste Weise erzielt.

27866 11|mw

Zur Vermeidung des aufgezeigten Nachteils wird erfindungsgemäß vorgesehen, daß in der Zuleitung für
das Verbrennungsgas ein Sensor für die Zusammensetzung
desselben angeordnet ist, welcher den Druckregler entsprechend dem bekannten Zusammenhang von Gasqualität,
Gasmenge und Motorleistung betätigt, und daß in Abhängigkeit von der bei einer bestimmten Leistung des
Motors gewünschten Abgastemperatur oder in Abhängigkeit vom Restsauerstoff im Abgas, die jeweils durch
einen Sensor im Abgasstrom überwacht werden, eine Luftzufuhr direkt in den Motor erfolgt.

Zunächst wird beim erfindungsgemäßen Regelverfahren das
Problem der richtigen Luftzumischung also isoliert
betrachtet und gelöst, insbesondere unabhängig davon,
welcher Heizwert für das gerade zuströmende Gas festgestellt wird.

Erfolgt die Kontrolle der Luftzufuhr in Abhängigkeit
von der Abgastemperatur, ist eine recht einfache
Regelung möglich, da einige einfache und wohlbekannte
Zusammenhänge zwischen dieser Temperatur und dem Luftanteil des verbrannten Gemisches bestehen. Man kann
davon ausgehen, daß die Abgastemperatur umso höher
sein wird, je geringer der Luftüberschuß in der verbrannten Gasmischung ist. Dies hat seinen Grund einerseits darin, daß bei großem Luftüberschuß die Verbrennungswärme auf eine größere Gasmenge verteilt
wird, andererseits darin, daß es bei zu magerem Gemisch
zu Zündausfällen bzw. unvollständiger Verbrennung
kommt. Für die Praxis bedeutet dies, daß die Abgastemperatur so hoch wie möglich sein soll. Die obere
Grenze wird hiebei durch jenen konstanten Temperaturwert gebildet, der nicht überschritten werden darf,
wenn Beschädigungen des Motors vermieden werden sollen.
Die Regelung der Luftzufuhr beschränkt sich somit im normalen Leistungsbereich einer Gasmaschine darauf,
die Luftzufuhr so weit zu drosseln, daß die Abgastemperatur bis zu dem für die geregelte Maschine
charakteristischen zulässigen Höchstwert ansteigt.

Alternativ zur temperaturabhängigen Regelung der Luftzufuhr ist es auch möglich, die Zuluftdrosselung in
der Weise durchzuführen, daß der Sauerstoffanteil im
Abgas einen vorgegebenen Wert nicht übersteigt.

Dadurch, daß beim erfindungsgemäßen Verfahren eine
dauernde Optimierung der Gemischzusammensetzung sichergestellt ist, wird erreicht, daß die Maschinenleistung
in eindeutiger Weise vom Heizwert des zugeführten Gases
bestimmt ist. Die Einstellung des Druckreglers ist
somit eindeutig bestimmt, wenn gefordert wird, daß
den verschiedenen Betriebszuständen der Gasmaschine,
deren Extremwerte Leerlauf und Vollast darstellen, unabhängig von der Art des zugeführten Gases eine bestimmte Stellung des Einlaßventils zugeordnet werden
soll und wenn die Gasqualität bekannt ist. Diese wird
erfindungsgemäß mit bekannten Sensoren unmittelbar festgestellt. Die Einstellung des Druckreglers erfolgt dann
in der Weise, daß einer bestimmten Gasqualität jener
Gasdruck zugeordnet wird, welcher gemäß vor der Inbetriebnahme der Anlage durchgeführten Versuchen bei einem
bestimmten Querschnitt der Einlaßventile einem vorgegebenen Leistungsniveau entspricht. Auch in diesem
Fall bewährt sich die erfindungsgemäße Abtrennung der
Kontrolle des Mischungsverhältnisses, da auch im Laufe
der Zeit eintretende Veränderungen gegenüber der vorweg
gemessenen Motorcharakteristik   lediglich den zur Erzielung einer gewissen Leistung erforderlichen Ventilhub
verändern, nicht jedoch zu einer Verschlechterung der
Energieausbeute führen.

Weitere Einzelheiten der Erfindung werden anschließend anhand der Zeichnung erläutert.

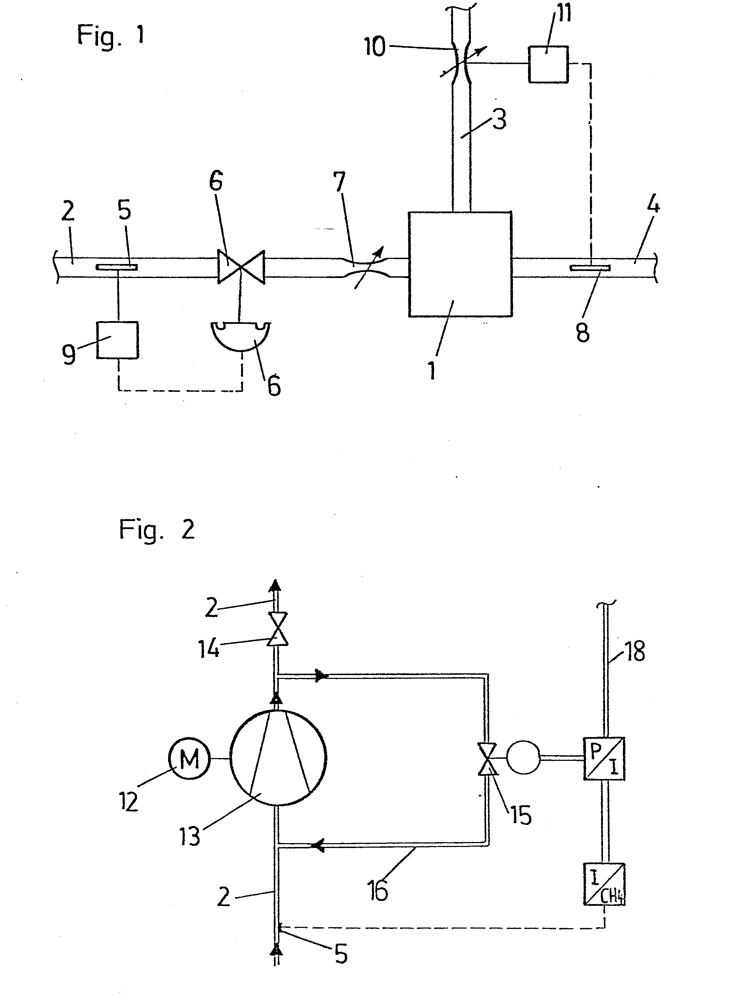

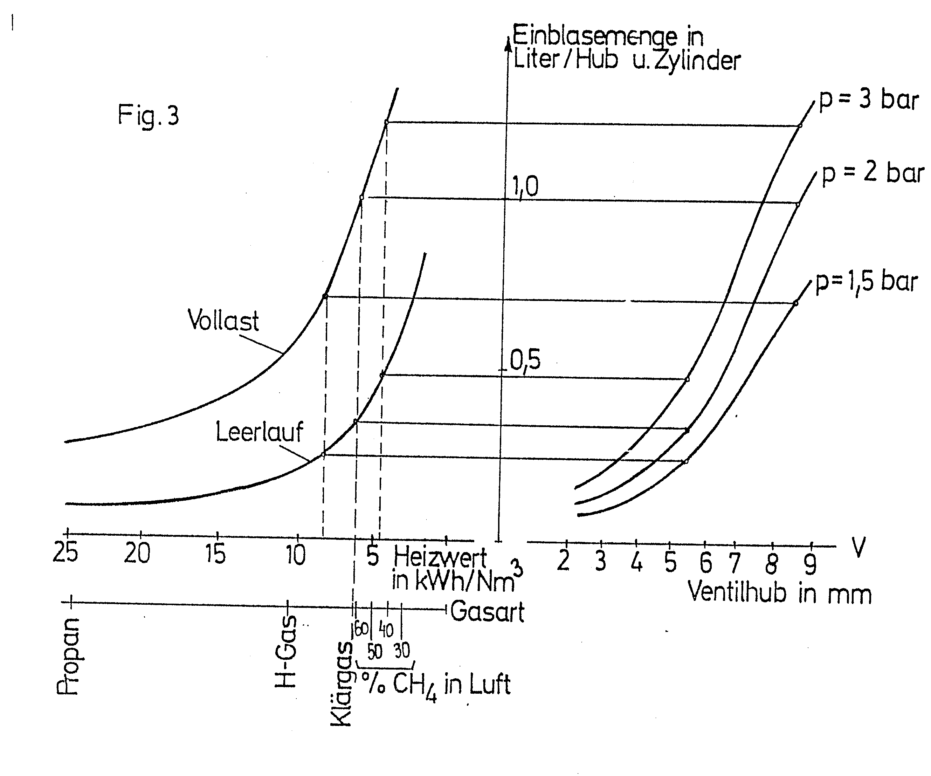

In dieser beschreibt Fig. 1 schematisch ein Ausführungsbeispiel der Erfindung, Fig. 2 eine Variante zum Druckminderventil 6 in Fig. 1, Fig. 3 ist ein Diagramm, das den Zusammenhang zwischen Heizwert und Ventilhub in Abhängigkeit vom Druck des Verbrennungsgases illustriert.

In Fig. 1 ist schematisch ein Motor 1 dargestellt, mit einem querschnittsveränderlichen Einlaßventil 7 für das durch die Leitung 2 zugeführte Verbrennungsgas. Durch die Leitung 3 wird Verbrennungsluft zugeführt, deren Menge durch die Stellung der veränderlichen Luftklappe 10 bestimmt ist. Das Abgas verläßt den Motor durch die Leitung 4. Ein Sensor 5 mißt laufend einen kennzeichnenden Wert des Verbrennungsgases, und zwar den Gehalt an brennbaren Bestandteilen, vorzugsweise Methan, oder den Gehalt an Sauerstoff, oder den Gehalt an nichtbrennbarem Anteil, vorzugsweise Stickstoff, oder den Heizwert. Über einen Druckregler 9 wird ein Druckregelventil 6 gesteuert, welches durch Veränderung des Druckes die zugehörige Verbrennungsgasmenge so beeinflußt, daß bei höherem Heizwert des Verbrennungsgases weniger und bei niedrigem Heizwert mehr Verbrennungsgas zugeführt wird und damit die in der Zeiteinheit zugeführte Energiemenge konstant bleibt.

In der Abgasleitung 4 wird über einen geeigneten Sensor 8, mit welchem ein charakteristischer Wert der Abgase gemessen wird, beispielsweise die Temperatur oder der Sauerstoffgehalt, die Ansaugluft über die Steuereinrichtung 11 und die Luftklappe 10 auf die erforderliche Menge eingestellt.

Fig. 2 zeigt die bevorzugte konstruktive Ausführung des Druckregelventils 6. Das Verbrennungsgas, dessen Zusammensetzung durch den Sensor 5 überwacht wird, gelangt hier durch die Leitung 2 in einen Vorverdichter 13, welcher durch einen Motor 12 angetrieben ist. Der bei 14 anstehende Druck wird dadurch reguliert, daß über die Bypass-Leitung 16 ein je nach der Stellung des Ventils 15 verschieden großer Anteil des verdichteten Verbrennungsgases wieder in die Zuführungsleitung rückgeführt wird. Die Stellung des Ventils 15 wird in der Weise bestimmt, daß der Sensor 5 in Abhängigkeit vom Gehalt an $CH_4$ im Verbrennungsgas ein Stromsignal erzeugt, welches wiederum dazu dient, den Hilfsdruck in der Leitung 18 zu beeinflussen, welcher die Stellung des Ventils 15 bestimmt.

Fig. 3 zeigt links die Einblasmenge an Verbrennungsgas, welche notwendig ist, um bei einer bestimmten Gaszusammensetzung bzw. dem entsprechenden Heizwert den Leerlauf oder die volle Leistung des Motors zu ermöglichen. Erfindungsgemäß soll sichergestellt sein, daß trotz Zuführung von Gasen mit verschiedenem Heizwert die Stellung des Einlaßventils nur eine Funktion der gewünschten Leistung, nicht jedoch der Gaszusammensetzung ist. Um dies zu erreichen, ist dem Gas mit dem größten Heizwert der geringste Einblasdruck (1,5 bar) zugeordnet, dem Gas mit dem geringsten Heizwert der größte Einblasdruck (3 bar).

**0142490**

Patentansprüche :

1. Verfahren zum Betrieb einer Gasmaschine mit Gas unterschiedlichen Heizwertes, wobei den Zylindern der Gasmaschine getrennt brennbare Bestandteile enthaltendes Verbrennungsgas einerseits und Luft andererseits zugeführt werden (innere Gemischbildung), und bei einer Änderung in der Zusammensetzung des Verbrennungsgases dieses bis zur Einleitung in die Gasmaschine lediglich hinsichtlich seiner pro Zeiteinheit zugeführten Menge durch Änderung seines Druckes derart geändert wird, daß an einem Druckregler kontinuierlich jener Druck des Verbrennungsgases eingestellt wird, welcher einer gleichbleibenden Zuordnung zwischen der Stellung der Einlaßventile für das Verbrennungsgas und der vom Motor abgegebenen Leistung entspricht, dadurch gekennzeichnet, daß in der Zuleitung für das Verbrennungsgas ein Sensor (5) für die Zusammensetzung desselben angeordnet ist, welcher den Druckregler entsprechend dem bekannten Zusammenhang von Gasqualität, Gasmenge und Motorleistung betätigt, und daß in Abhängigkeit von der bei einer bestimmten Leistung des Motors gewünschten Abgastemperatur oder in Abhängigkeit vom Restsauerstoff im Abgas, die jeweils durch einen Sensor (8) im Abgasstrom überwacht werden, eine Luftzufuhr direkt in den Motor erfolgt.

2. Einrichtung zur Durchführung des Verfahrens nach Anspruch 1, dadurch gekennzeichnet, daß als Druckregler ein Vorverdichter (13) mit gleichbleibender Fördermenge dient, der von einer Leitung (16) mit kontinuierlich verstellbarem engstem Querschnitt überbrückt ist.

Fig. 1

Fig. 2

0142490

Fig. 3

Einblasemenge in Liter/Hub u. Zylinder

p = 3 bar

p = 2 bar

p = 1,5 bar

1,0

0,5

Vollast

Leerlauf

25  20  15  10  5  Heizwert in kWh/Nm$^3$

2  3  4  5  6  7  8  9  V

Ventilhub in mm

Gasart

Propan

H-Gas

Klärgas

60 | 40 |
50  30
% CH$_4$ in Luft

0142490